Europäisches Patentamt

European Patent Office

Office européen des brevets

(11) Publication number: **0 433 917 A1**

# EUROPEAN PATENT APPLICATION

(21) Application number: 90124262.8

(22) Date of filing: 14.12.90

(51) Int. Cl.⁵: **B60C 15/04**, B29D 30/48

(30) Priority: 22.12.89 IT 6816889

(43) Date of publication of application:
26.06.91 Bulletin 91/26

(84) Designated Contracting States:
DE ES FR GB IT LU

(71) Applicant: **BRIDGESTONE/FIRESTONE, INC.**
**1200 Firestone Parkway**

Akron, Ohio 44317(US)

(72) Inventor: **Siegenthaler, Karl J.**
**Via dei Pescatori, 153**
**I-00100 Roma - Ostia(IT)**

(74) Representative: **Jorio, Paolo et al**
**STUDIO TORTA Società Semplice Via Viotti 9**
**I-10121 Torino(IT)**

(54) Automotive tire bead.

(57) An automotive tire bead (1) consisting of a substantially circular-section annular element (2) formed from a continuous metal wire (3) wound in such a manner as to form a number of packed coils (5); which coils (5) are arranged over a substantially circular section of annular element (2) according to a given law, and are held together by a wire (7) of heat-shrinkable material wound about annular element (2) and having opposite ends (9) joined together.

Fig. 1

EP 0 433 917 A1

## AUTOMOTIVE TIRE BEAD

The present invention relates to an automotive tire bead.

Automotive tires are generally manufactured using two known types of bead, a first type consisting of a number of rings, usually metal, packed to form an annular element generally having a parallelepiped section; and a second so-called "program" bead usually consisting of a metal wire wound according to a given law or "program" into an annular element usually having a section shaped as a parallelepipedon or trapezium.

Both the rings and metal wire employed on known beads of the aforementioned types are coated with a layer of elastomeric material which is often at least partially precured prior to application of the bead, and the main function of which is to safeguard the shape and so enable troublefree storage and handling of the bead.

Known beads of the aforementioned type have a number of drawbacks resulting from said elastomeric coating, which, in addition to being relatively expensive to apply and precure, locks the elements or coils constituting said annular element both axially and radially, thus preventing the bead from safely absorbing the stress applied thereto during tire formation on the tire building drum.

According to the standard technique now almost universally employed in the tire manufacturing industry, successive layers of elastomeric material, differing in composition and some reinforced internally, are placed in known manner, one on top of the other, about the outer surface of a tire building drum, so as to form a stratified tubular element or inner carcass.

Two beads are then fitted and locked symmetrically on to said stratified tubular element, so as to define thereon an intermediate portion between the two beads, and two end portions extending outwards of the same.

The building drum is then operated in known manner so as to bring the two beads closer together and so curve the intermediate portion radially outwards. At the same time, the two end portions are turned so as to contact the outer surface of the intermediate portion and so enclose the two beads.

Turning of the end portions is generally known to result in twisting of the beads. When using known beads consisting of coated packed elements or coils, usually of other than circular section, this generally results in distortion and, consequently, impaired uniformity of the section, and the formation of dangerous internal stress.

It is an object of the present invention to provide a bead designed to overcome the aforementioned drawbacks typically associated with known beads of the aforementioned types.

According to the present invention, there is provided an automotive tire bead comprising a substantially circular-section annular element consisting of a portion of a continuous elongated element wound in such a manner as to form a number of coils packed according to a given law; and binding means for maintaining said coils in said packed position; characterised by the fact that said portion of said elongated element consists of a portion of a first bare wire, and that said binding means comprise a portion of a second non-metal wire of heat-shrinkable material; said portion of said second wire forming a loop and being wound about said annular element.

Said loop is preferably formed by knotting the ends of said portion of said second wire.

Moreover, said knot is preferably a flat knot, and said second wire preferably a twisted wire comprising at least two strands.

Alternatively, said bead comprises a tubular body; said portions of said first and second wires presenting respective opposite end portions; said opposite end portions engaging said tubular body; and said tubular body being gripped about said end portions for connecting all said end portions together.

The invention will now be described with reference to the accompanying drawings, in which:

FIGURE 1 shows a partial view in perspective of a first preferred embodiment of the bead according to the present invention;

FIGURE 2 shows a larger-scale section along line II-II in FIGURE 1;

FIGURE 3 shows a larger-scale schematic view of a detail in FIGURE 1;

FIGURE 4 shows a larger-scale schematic view of a variation to the FIGURE 3 detail.

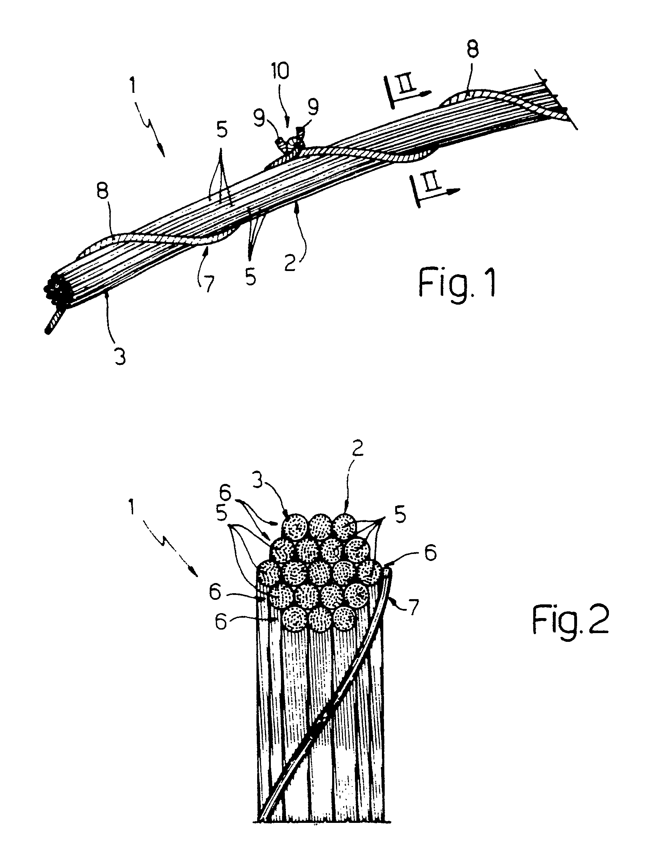

Numeral 1 in FIGURE 1 indicates a "program" bead for an automotive tire, said bead consisting of a substantially circular-section annular element 2 formed from a portion of continuous bare metal wire 3 having opposite ends 4 and wound in such a manner as to form a number of packed coils 5.

Wire 3 may consist of a solid metal wire preferably, but not necessarily, of circular section, or preferably, as in the example shown, of a metal cable.

As shown in FIGURE 2, coils 5 are arranged over the substantially circular section of annular element 2 according to a given law or "program". In the example shown, in fact, coils 5 are arranged in a number of superimposed layers 6, each of the intermediate layers of which comprises a larger number of coils 5 than the outer layers 6, so as to produce said substantially circular section of annular element 2.

Said coils 5 are packed together by a portion of outer non-metallic wire or yarn 7 of heat-shrinkable material, e.g. polyamide, wound in such a manner as to form coils 8 about annular element 2 and having two ends 9 tied in a knot 10.

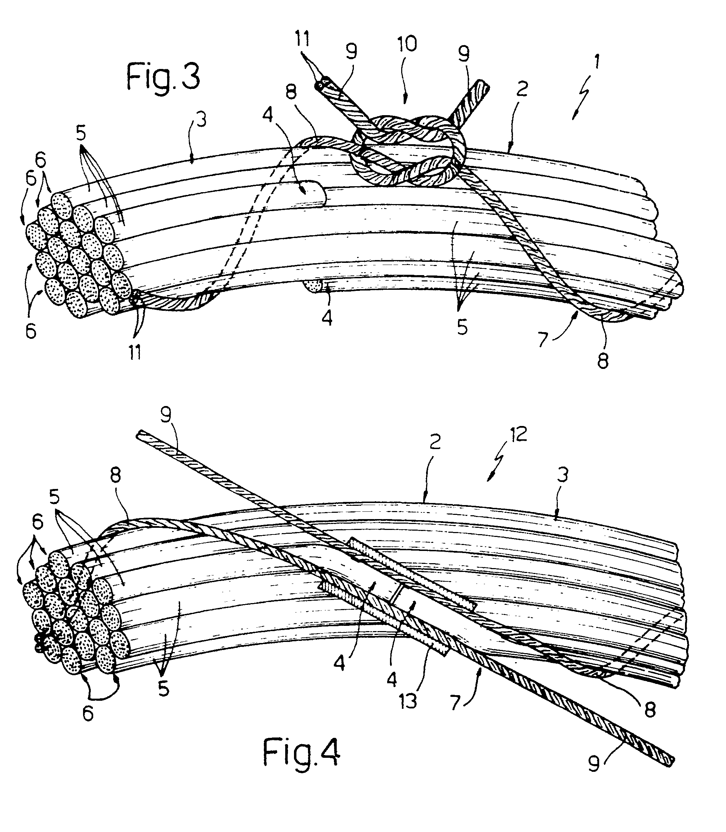

As shown more clearly in FIGURE 3, wire 7 is a twisted wire consisting, in the example shown, of two (or, according to a variation not shown, more) strands 11, and knot 10 is a flat knot.

Once knot 10 is tied, the above characteristic provides for tightening coils 8 about annular element 2 by pulling in opposite directions ends 9 projecting from knot 10. In the presence of a flat knot, in fact, a wire with two or more strands acts in a manner similar to that of a flexible screw engaged inside a nut screw, so that, once knot 10 is tied and pull exerted on ends 9 projecting from the same, the coils formed by twisted strands 11 contract upstream and expand downstream from knot 10, thus allowing wire 7 to slide and "screw" through knot 10, and coils 8 to tighten about annular element 2.

In other words, the above characteristic provides for tightening coils 8 about annular element 2 with no need for pretensioning wire 7 when tying knot 10, thus enabling knot 10 to be tied using any type of knotting machine currently available on the market.

Once formed, bead 1 is fitted on to a tire building drum (not shown) and subjected, during formation of the tire (not shown), to said stresses comprising, in particular, said evenly-distributed twisting moment.

By virtue of the deformable, relatively elastic nature of wire 7, which permits both transverse and axial displacement of coils 5, said coils 5, when subjected to said twisting moment, roll over one another with very little shearing stress, and without distorting the section of annular element 2, which is maintained substantially circular.

When subsequently curing the finished green tire, wire 7 shrinks, so as to tighten coils 8 about annular element 2, which thus remains perfectly compact for ensuring greater uniformity of the finished tire.

Moreover, by virtue of tightening coils 8, the working stress on the tire is absorbed by substantially the entire section of annular element 2. Indeed, unlike known beads of the same type, wherein the coils are held together by the cured coating material, and the first and last coil provide for absorbing substantially no stress, which is distributed entirely over the inner coils, once wire 7 on bead 1 is shrunk, coils 5 are so packed as to be able to absorb substantially equal amounts of stress.

For a given stress resistance, therefore, fewer coils 5 are required for manufacturing bead 1 than for manufacturing an equivalent bead using the same wire 3. Fig.4 shows a variation bead 12 substantially similar to bead 1, except that it comprises a tubular body 13 having opposite ends engaged by opposite ends 4 of wire 3. Tubular body 13 also houses ends 9 of wire 7 which, instead of being knotted as on bead 1, are connected by permanently deforming tubular body 13, so as to grip ends 4 and 9 and so loop wires 3 and 7.

Before gripping tubular body 13 about ends 4 and 9, ends 9 are obviously pulled in opposite directions for partially tightening coils 8 about annular element 2.

**Claims**

1. An automotive tire bead (1) (12) comprising a substantially circular-section annular element (2) consisting of a portion of a continuous elongated element (3) wound in such a manner as to form a number of coils (5) packed according to a given law; and binding means for maintaining said coils (5) in said packed position; characterised in that said portion of said elongated element (3) consists of a portion of a first bare wire, and that said binding means comprise a portion of a second non-metal wire (7) of heat-shrinkable material; said portion of said second wire (7) forming a loop and being wound about said annular element (2).

2. A bead as claimed in Claim 1, characterised in that said first wire (3) is made of metal.

3. A bead as claimed in Claim 2, characterised in that said first wire (3) is a cable.

4. A bead as claimed in any one of the foregoing Claims, characterised in that said portion of said second wire (7) presents two opposite ends (9) joined together.

5. A bead as claimed in claim 4, characterised in that said two ends (9) are tied together in a knot (10).

6. A bead as claimed in Claim 5, characterised in that said knot (10) is a flat knot, and said second wire (7) is a twisted wire comprising at least two strands (11).

7. A bead as claimed in any one of the foregoing Claims from 1 to 3, characterised in that it comprises a tubular body (13); said portions of said first (3) and said second (7) wire having respective opposite end portions (4, 9); said opposite end portions (4, 9) engaging said tubular body (13); and said tubular body (13) being gripped about said end portions (4, 9) for connecting all said end portions (4, 9) together.

8. A bead as claimed in any one of the foregoing Claims, characterised in that said heat-shrinkable material is a polyamide.

Fig. 1

Fig. 2

Fig.3

Fig.4

European
Patent Office

EUROPEAN SEARCH
REPORT

Application Number

EP 90 12 4262

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 106 952  (W.H. RUDDER) — — — | 1-8 | B 60 C 15/04 |
| A | US-A-4 854 361  (GASOWSKI et al.) — — — | 1,2 | B 29 D 30/48 |
| A | EP-A-0 320 221  (NATIONAL-STANDARD CO.) * Figure 28; column 17, line 40 - column 18, line 4 * — — — | 1,2,4 | |
| A | US-A-1 767 772  (R.C. PIERCE) — — — | 1,2,4 | |
| A | US-A-1 686 155  (A.C. HOPKINS) — — — — — | 1,2,4 | |

| TECHNICAL FIELDS SEARCHED (Int. Cl.5) |
|---|
| B 29 D B 60 C |

The present search report has been drawn up for all claims

| Place of search | Date of completion of search | Examiner |
|---|---|---|
| The Hague | 19 March 91 | SUENDERMANN R.O. |